# EUROPEAN PATENT SPECIFICATION

(11) **EP 1 566 315 B1**
(45) Date of publication and mention of the grant of the patent: **30.05.2007**
(21) Application number: 05003517.9
(22) Date of filing: 18.02.2005
(51) Int. Cl.: B60R 21/16

(54) **A safety logic unit for vehicle rollover detection systems and a method for determining near rollover situations**
Sicherheitslogikeinheit für Fahrzeugüberschlag-Erkennungssysteme und Verfahren zur Erkennung von Beinahe-Überschlägen
Circuits logiques de sécurité pour un système de détection du retournement d'un véhicule et méthode pour determiner un presque retournement d'un véhicule

(30) Priority: 23.02.2004 PL 36549904
(43) Date of publication of application: 24.08.2005
(73) Proprietor: Delphi Technologies, Inc., Troy, MI 48007 (US)
(72) Inventor: Geborek, Mariusz, 30-611 Krakow (PL); Sygnarowicz, Daniel, 32-830 Wojnicz (PL); Urbanek, Aleksandra, 41-922 Radzionkow (PL)
(74) Representative: Lukaszyk, Szymon

(56) References cited:
- DE-A1- 19 609 176
- DE-A1- 19 744 083
- US-A1- 2002 075 140

## Description

The present invention relates to a safety logic unit for vehicle rollover detection systems comprising a main rollover detection logic unit and at least one protection device for an occupant or occupants of a vehicle. The present invention relates also to a method of determining dangerous situations that with high probability may lead to a rollover of a vehicle.

The purpose of the rollover detection system is an activation of protection devices such as seat belts pretensioners, pop-up roll bars or air bags, especially air bags protecting occupants' heads during rollover accident.

In many systems for detecting dangerous situations, in particular in the rollover detection systems there are two paths of signal processing: the main path being the main logic and an independent arming path, being separate safety logic. An essential purpose of the safety logic is to decrease the probability of inadvertent deployment in an event of failure or error in the main rollover detection logic, wherein an activation signal of the main logic is summed with an activation signal of the safety logic by means of AND function at the last stage of the processing, directly before an activation of protection devices.

Examples of such systems are disclosed in U.S. Pat. 6,535,800, U.S. Pat. 6,600,414 or WIPO publication WO 03/010034. (preamble of claim 1 resp. claim 12.)

Publication WO 03/010034 discloses a rollover determination system comprising a first roll rate sensor, a lateral acceleration sensor and a main rollover detection logic unit that determines possibility of a rollover of a vehicle on the basis of the roll rate and the lateral acceleration of a vehicle. The system comprises also a safety logic unit for confirming a rollover accident, whose input is signalled from an additional roll rate sensor and whose output is summed with an output signal of a main rollover detection logic unit by means of AND gate.

The aim of the present invention is to provide a safety logic unit for vehicle rollover detection systems, which would generate an activation signal during a vehicle rollover or near rollover event. Such a logic unit should also feature a resistance for mechanical vibrations, a simple construction, low manufacturing costs and a possibility to be used as an additional safety solution for rollover detection systems with no need for substantial modification thereof.

The aim of the present invention is also to provide a simple method for detecting dangerous situations that may end up with a rollover of a vehicle.

According to the present invention there is provided a safety logic unit for vehicle rollover detection systems comprising a main rollover detection logic unit and at least one protection device for an occupant or occupants of a vehicle, which according to the invention is connected with a vehicle lateral acceleration sensor and generates an output signal indicating a near rollover event, when the lateral acceleration of a vehicle exceeds the first predefined threshold value or, when the lateral acceleration of vehicle exceeds the second predefined threshold value that is lower than the first predefined threshold value and simultaneously at least one additional safety logic unit activation signal is present.

An activation of the safety logic unit may be used, for example, to active repeatable protection devices, that activate in potentially dangerous situations and return to its steady state, when the danger has passed, e.g. mechanical resetable seatbelts pretensioners.

It is especially advantageous if an additional safety logic unit activation signal, according to the present invention, is a signal delivered by the main logic unit.

By means of employing of main logic signals in operation of the safety logic unit, additional sensors are not required. Even during failure of the main logic unit, the safety logic unit shall be substantially inactive during normal driving conditions not threatening a rollover (for example driving straight, gentle driving with low speed). An additional activation signal may occur in the main logic unit, at an intermediate stage of signal processing, as a result of main logic unit algorithm activity, or may simply be generated by the main logic unit for the needs of the safety logic unit.

In such situations, it is advantageous if the additional signal of activation of the safety logic unit is generated by the main logic unit, when the roll rate of a vehicle exceeds a predefined threshold value.

In this case, it is also advantageous if for generating of additional activation signal apart from exceeding a predefined threshold value by the roll rate of a vehicle, exceeding a predefined threshold value by the linear velocity of a vehicle is also required.

An additional activation signal of the safety logic unit may also be generated by the main logic unit, only if the roll angle of a vehicle exceeds a predefined threshold value.

Moreover, it is advantageous if the safety logic unit, according to the present invention, has a lateral acceleration sensor, whose signal is not used by the main logic unit.

The safety logic unit according to the present invention, may also preferably contain a vehicle roll rate sensor, and an additional activation signal of the safety logic unit shall occur when a signal of the vehicle roll rate sensor exceeds a predefined threshold value.

Obviously in this solution there may occur two additional activation signals: the first activation signal from vehicle roll rate sensor of the safety logic unit, and the second activation signal from the main logic unit.

The safety logic unit according to the present invention is relatively simple construction; therefore it has a high probability of activation thereof during dangerous situations that not necessarily would end up with a vehicle rollover. Therefore to activate protection devices the main logic unit and safety logic unit activation is necessary.

Owing to this an appropriate protection device e.g. air-bags shall be deployed only when both logic units are activated.

It is advantageous if at least one activation signal is sustained for a predetermined period.

It is also advantageous if at least one sensor input value is preprocessed.

A preprocessing preferably involves at least signal scaling, removing a sensor drift and/or filtering a signal.

In particular, according to the present invention there is provided a safety logic unit for vehicle rollover detection systems comprising a main rollover detection logic unit and at least one protection devices for the occupant or occupants of a vehicle, where the main logic unit activation signal is summed with the safety logic unit activation signal by means of an AND gate at the last stage of preprocessing, directly before activation of protection devices, where, at least one additional activation signal, generated by the main logic unit at an intermediate stage of the preprocessing path, is necessary to activate the safety logic unit.

According to the present invention there is also provided a method of determining vehicle near rollover situations, characterized in that, it comprises the steps of measuring of the lateral acceleration of a vehicle and generating an output activation signal that determines near rollover situation, if the lateral acceleration of a vehicle exceeds the first predefined threshold value or, the lateral acceleration of a vehicle exceeds the second predefined threshold value that is lower than the first predefined threshold value and at least one additional activation signal is present.

The method according to the present invention may preferably include measuring the roll rate of a vehicle, and an additional activation signal occurs, when the roll rate of a vehicle exceeds a predefined threshold value.

The method according to the present invention may also preferably include measuring the linear velocity of a vehicle, and an additional activation signal occurs, when the linear speed of a vehicle exceeds a predefined threshold value.

The method according to the present invention may also include measuring the roll angle of a vehicle, and an additional activation signal shall occur, when the roll angle of a vehicle exceeds a predefined threshold value, wherein the roll angle of a vehicle may be calculated on the basis of the vehicle roll rate.

The safety logic unit according to the present invention is presented below by way of examples of preferred embodiments with reference to figures of the drawing, in which:
Fig. 1 is a block and circuit diagram of an embodiment of a rollover detection system comprising the logic unit according to the present invention,
Fig. 2 is a block and circuit diagram of another embodiment of a rollover detection system,
Fig. 3 is a block and circuit diagram of further embodiment of a rollover detection system,
Fig. 4 is a block and circuit diagram of yet another embodiment of a rollover detection system, and
Fig. 5 is a block and circuit diagram of an implementation of a rollover detection system.

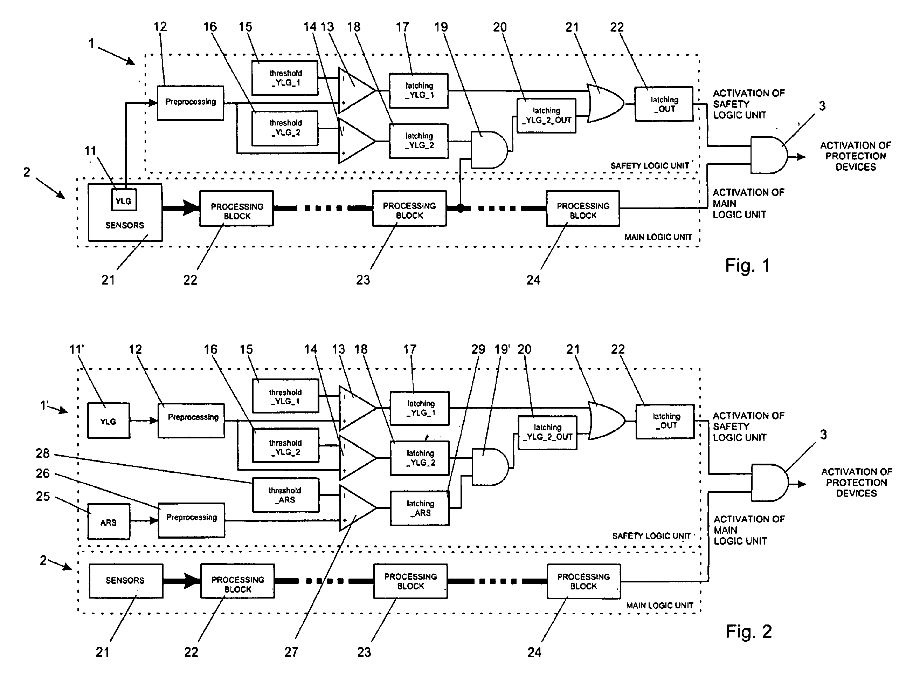

As shown schematically in Fig. 1, in a rollover detection system there are two logic units: safety logic unit 1 and main logic unit 2.

The main logic unit 2 collects the signals from a sensors block 21, comprising among others, a vehicle low lateral acceleration sensor (YLG) 11, fixed in a vehicle in such a way that its working axis is perpendicular to the longitudinal and vertical axis of a vehicle. This sensor may be, e.g. ADXL 202 sensor made by Analog Devices, Inc., USA. Sensor of this type is capable to detect accelerations in the range from 0 g to about ±2 g.

The input signals of the main logic unit 2 are subsequently processed by serially connected processing blocks 22, 23, 24 and, in accordance with the working algorithm of the main logic unit, in the case of the rollover of a vehicle the activation signal occurs at the input of an AND gate 3.

A signal of the sensor 11 is the first input signal of the safety logic unit 1 and is processed by preprocessing module 12, where signal scaling, sensor drift removal and broad-band filtering takes place to remove the noise of the sensor before digital sampling. The preprocessing modules that are discussed below realize functions similar to that of the module 12.

A modulus of the output signal of the module 12 is subsequently compared in comparators 13 and 14 with predefined threshold values 15 ("threshold_YLG_1") and 16 ("threshold_YLG_2"). The appropriate choice of these and others parameters depends on a lot of factors, for example the wheel track, the mass, the position of centre of gravity, or the moment of inertia of a vehicle.

At the outputs of the comparators 13 and 14 the TRUE activation signal occurs, if a filtered signal of the sensor 11 exceeds the predefined threshold values 15 or 16. These signals are subsequently sustained for predetermined periods "latching_YLG_1" and "latching_YLG_2" in the modules 17 and 18.

The lateral acceleration of a vehicle within the range from 1.0 to 1.8 g, that is value exceeding the first threshold value "threshold_YLG_1", appears unlikely to occur during normal driving conditions. It may occur during aggressive driving or side collision, thus an activation of the comparator 13 leads to direct activation of the safety logic unit 1. In this case an activation signal is sent by OR gate 21, sustained in the module 22 for 0.2 s ("latching_OUT") and becomes the first input of AND gate 3, the activation of which (TRUE signal) leads to an activation of the protection devices.

Since the lateral acceleration of a vehicle ranging from 0.1 to about 0.8 g, that is value exceeding the second threshold value "threshold_YLG_2", may occur during normal driving conditions, for example while making sharp turns, during aggressive driving, or considerable bank of a vehicle, an additional activation signal is necessary to activate the safety logic unit 1.

In the system shown in Fig. 1, an additional activation signal is delivered from the main logic unit. At intermediate stage of processing of main logic 2 signals, after the processing block 23, an activation signal is delivered also at the input of the AND gate 19, the second input of which is the activation signal of the comparator 14 which is sustained by the module 18 for a predetermined period "latching_YLG_2". An activation signal of the AND gate 19 is sustained for a predetermined period "latching_YLG_2_OUT" in the module 20 and it is the second input of the OR gate 21.

Consequently, to activate occupant protection devices one of the following conditions is required:
a) an activation of the main logic unit 2 and vehicle lateral acceleration value exceeding "threshold_YLG_1" 15 or
b) an activation of the main logic unit 2 and vehicle lateral acceleration value exceeding "threshold_YLG_2" 16 (yet lower than "threshold_YLG_1"), simultaneously with intermediate activation of the main logic unit 2.

An intermediate activation of the main logic unit depends on the working algorithm of the main logic unit 2 and may mean, in particular exceeding the roll rate or the roll angle of a vehicle, or exceeding the linear speed of a vehicle above predefined threshold values, wherein the roll angle of a vehicle may be calculated by the main logic unit on the basis of the roll rate of a vehicle by integration of the roll rate.

In other embodiments of the safety logic units, presented below, the reference numerals of the elements performing the same functions correspond to those in Fig. 1.

The input of a safety logic unit 1', shown in Fig. 2, is separated from the input of a main logic unit 2. The safety logic unit 1' has an independent vehicle low lateral acceleration sensor 11' and an independent vehicle roll rate sensor (ARS) 25. The signal of the sensor 25 is processed in a module 26 and compared in a comparator 27 with predefined threshold value ("threshold_ARS") 28, on the output of which an activation signal shall appear, if the threshold value 28 is exceeded. The activation signal of the comparator 27 is sustained in the module 29 for 0.1 s ("latching_ARS") and it is the second input of AND gate 19'.

As shown, in this embodiment an additional activation signal is generated by the safety logic unit 1' itself and both logic units are not intermediately coupled.

The Table 1 below shows preferred ranges of calibration parameters values of the safety logic unit according to the present invention and their exemplary values for the logic unit 1' shown in Fig. 2.

**Table 1**

| Calibration parameter | Preferred range | Example value |
|---|---|---|
| threshold_YLG_1 | from 1.0 to 1.8 [g] | 1.3 g |
| threshotd_YLG_2 | from 0.1 to 0.8 [g] | 0.3 g |
| threshold_ARS | from 15 to 40 [°/s] | 30°/s |
| latching _YLG_1 | from 0.1 to 0.5 [s] | 0.1 s |
| latching _YLG_2 | from 0.1 to 0.5 [s] | 0.25 s |
| latching _ARS | from 0.1 to 0.5 [s] | 0.1 s |
| latching _YLG_ 2_OUT | from 0.1 to 0.5 [s] | 0.2 s |
| latching_OUT | from 0.1 to 0.5 [s] | 0.2 s |

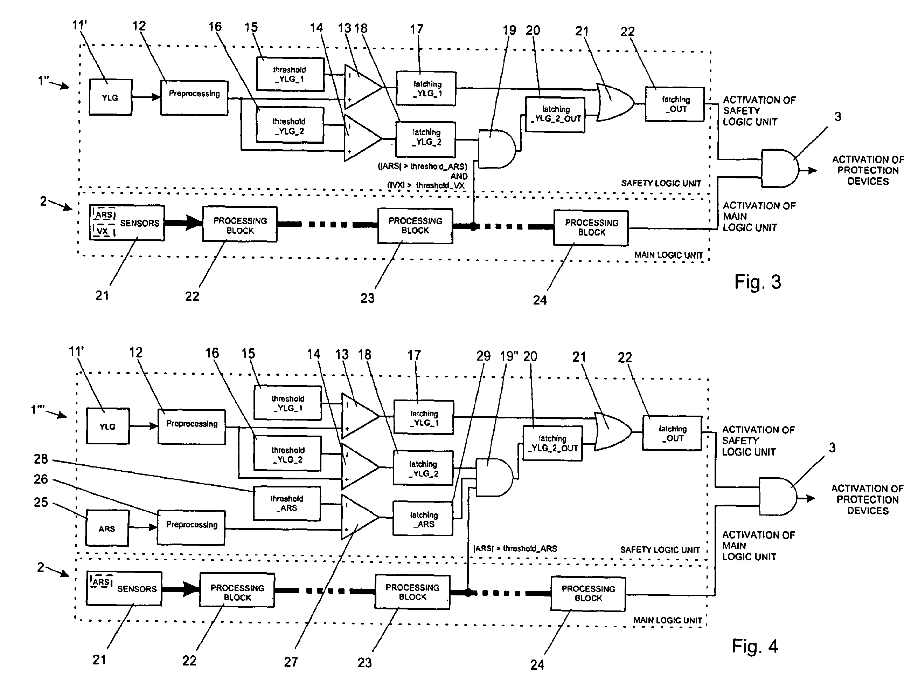

Fig. 3 shows another embodiment of safety logic unit 1" according to the present invention in the rollover detection system. This logic unit differs from the one shown in Fig. 1 by the presence of a sensor 11' and the type of condition of indirect activation of the main logic unit, which in this case occurs, when both the roll rate (ARS) as well as the linear velocity (VX) of a vehicle exceed threshold values that are predefined in the main logic unit.

Fig. 4 presents yet another embodiment of the safety logic unit 1"'. Unlike the logic unit in Fig. 2, there is one more additional activation signal generated by the main logic unit 2, which is also a signal of exceeding the roll rate, however it is obtained on the basis of readings from the vehicle roll rate sensor of the main logic unit. Doubling the sensors allows to achieve higher reliability of operation - while exceeding the threshold value "threshold_YLG_2", it is necessary to confirm a dangerous situation by two independent vehicle roll rate sensors.

It is obvious that embodiments of the safety logic unit presented above may be implemented both as electronic circuits provided with suitable comparing, filtering, or summing elements, or as software by a suitable algorithm of an individual electronic control unit (ECU).

It is preferable to separate the main logic unit from the safety logic unit by using two independent ECUs, what provides considerable independence of the rollover detection system. The main logic unit and the additional safety logic unit may also be separately implemented in two individual microcontrollers (preferably of different types), that are placed in one ECU unit.

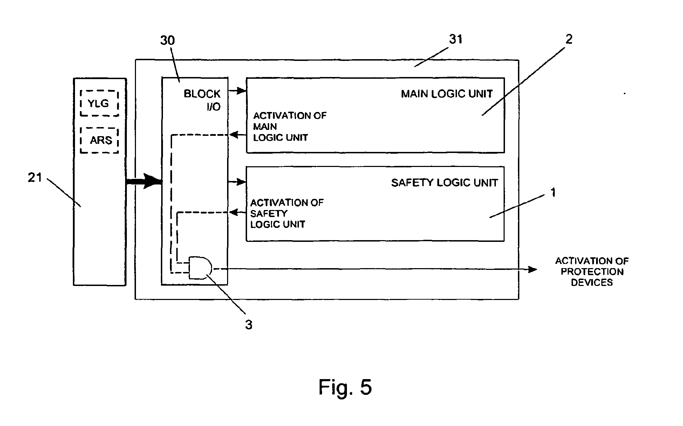

An example of such an implementation is presented in Fig. 5, where two microcontrollers are employed within one ECU unit 31: a microcontroller of the main logic unit 2 and a microcontroller of the safety logic unit 1. Both units are connected to an I/O block 30, through which they receive appropriate sensor signals. The output of the main logic unit 2 is coupled with the input of the AND gate 3 that is built in the block 30. The second input of the AND gate 3 is coupled with the output of the safety logic unit 1. Activation of both logic units is required to activate suitable protection device, e.g. an air-bag.

A safety logic unit according to the present invention is an incredibly simple, economical and elastic solution, owing to many calibration parameters. It is activated substantially in situations, when the probability of a vehicle rollover is significant. During normal driving conditions, for example driving on rough roads, making turns, driving in a straight line or driving uphill, it remains inactive.

## Claims

1. A safety logic unit for vehicle rollover detection systems comprising a main rollover detection logic unit and at least one protection device for the occupant or occupants of a vehicle, the safety logic unit is connected with a vehicle lateral acceleration sensor (11) and generates an output signal indicating a near rollover event, **characterized in that** the near roll-over event is indicated, when the lateral acceleration of a vehicle exceeds a first predefined threshold value (15) or, when the lateral acceleration of the vehicle exceeds a second predefined threshold value (16) that is lower than the first predefined threshold value (15) and simultaneously at least one additional safety logic unit (1, 1', 1", 1"') activation signal is present.

2. The safety logic unit as claimed in claim. 1, **characterized in that**, the additional safety logic unit activation signal is a signal delivered by a main logic unit (2).

3. The safety logic unit as claimed in claim. 2, **characterized in that**, the additional safety logic unit activation signal is generated by the main logic unit (2), when the roll rate of a vehicle exceeds a predefined threshold value.

4. The safety logic unit as claimed in claim. 3, **characterized in that**, the additional safety logic unit activation signal is generated by the main logic unit (2), when the linear velocity of a vehicle exceeds a predefined threshold value.

5. The safety logic unit as claimed in claim. 2, **characterized in that**, the additional safety logic unit activation signal is generated by the main logic unit (2), when the roll angle of a vehicle exceeds a predefined threshold value.

6. The safety logic unit as claimed in claim. 1 or 2, **characterized in that**, it further comprises a vehicle lateral acceleration sensor (11').

7. The safety logic unit as claimed in claim. 1 or 2, **characterized in that**, it further comprises a vehicle roll rate sensor (25), and an additional activation signal of the safety logic unit occurs when a signal of the vehicle roll rate sensor (25) exceeds a predefined threshold value (28).

8. The safety logic unit as claimed in claim. 1 or 2, **characterized in that**, an activation of the main logic unit (2) and an activation of the safety logic unit (1, 1', 1 ", 1"') is necessary to activate the protection devices.

9. The safety logic unit as claimed in claim. 1 or 2, **characterized in that**, at least one of the activation signals is sustained for a predetermined period (17, 18, 20, 22, 29).

10. The safety logic unit as claimed in claim. 1 or 2, **characterized in that**, an input value of at least one sensor (11, 11', 25) is preprocessed.

11. The safety logic unit as claimed in claim. 10, **characterized in that**, preprocessing involves at least signal scaling, removing a sensor drift and/or filtering a signal.

12. A method of determining near rollover situations, the method comprises the steps of measuring the lateral acceleration of a vehicle and generating an output activation signal that determines near rollover situation, **characterized in that** a near roll-over situation is determined if the lateral acceleration of the vehicle exceeds a first predefined threshold value or, the lateral acceleration of the vehicle exceeds a second predefined threshold value that is lower than the first predefined threshold value and at least one additional activation signal is present.

13. The method as claimed in claim. 12, **characterized in that**, it further comprises the step of measuring the roll rate of a vehicle, and an additional activation signal occurs, when a roll rate of a vehicle exceeds a predefined threshold value.

14. The method as claimed in claim. 13, **characterized in that**, it further comprises the step of measuring the linear velocity of a vehicle, and an additional activation signal occurs, when the linear velocity of a vehicle exceeds a predefined threshold value.

15. The method as claimed in claim. 12 or 13, **characterized in that**, it further comprises the step of measuring the roll angle of a vehicle, and an additional activation signal occurs, when the roll angle of a vehicle exceeds a predefined threshold value.

16. The method as claimed in claim. 15, **characterized in that**, the roll angle of the vehicle is calculated on the basis of the roll rate of a vehicle.

17. The method as claimed in claim. 12 or 13, **characterized in that**, at least one activation signal is sustained for a predetermined period.

18. The method as claimed in claim. 12 or 13, **characterized in that**, a value of at least one of measurement is preprocessed.

19. The method as claimed in claim. 18, **characterized in that**, said preprocessing involves at least signal scaling, removing a sensor drift and/or filtering a signal.

## Patentansprüche

1. Sicherheitslogikeinheit für Fahrzeugüberschlag-Erkennungssysteme, umfassend eine Überschlagerkennungs-Hauptlogikeinheit und mindestens ein Schutzgerät für den oder die Fahrzeuginsassen, wobei die Sicherheitslogikeinheit mit einem Fahrzeug-Lateralbeschleunigungssensor (11) gekoppelt ist und ein Ausgangssignal generiert, welches ein Beinahe-Überschlagereignis anzeigt,
**dadurch gekennzeichnet, dass**
ein Beinahe-Überschlagereignis angezeigt wird, wenn die Fahrzeug-Lateralbeschleunigung einen ersten vordefinierten Grenzwert (15) überschreitet oder wenn die Fahrzeug-Lateralbeschleunigung einen zweiten vordefinierten Grenzwert (16), der kleiner ist als der erste vordefinierte Grenzwert (15), überschreitet und gleichzeitig mindestens ein Aktivierungssignal einer zusätzlichen Sicherheitslogikeinheit (1, 1', 1", 1"') vorliegt.

2. Sicherheitslogikeinheit nach Anspruch 1,
**dadurch gekennzeichnet, dass**
dass das Aktivierungssignal der zusätzlichen Sicherheitslogikeinheit ein von einer Hauptlogikeinheit (2) bereitgestelltes Signal ist.

3. Sicherheitslogikeinheit nach Anspruch 2,
**dadurch gekennzeichnet, dass**
das Aktivierungssignal der zusätzlichen Sicherheitslogikeinheit von der Hauptlogikeinheit (2) erzeugt wird, wenn die Fahrzeugrollgeschwindigkeit einen vordefinierten Grenzwert überschreitet.

4. Sicherheitslogikeinheit nach Anspruch 3,
**dadurch gekennzeichnet, dass**
das Aktivierungssignal der zusätzlichen Sicherheitslogikeinheit von der Hauptsicherheitslogikeinheit (2) erzeugt wird, wenn die lineare Fahrzeuggeschwindigkeit einen vordefinierten Grenzwert überschreitet.

5. Sicherheitslogikeinheit nach Anspruch 2,
**dadurch gekennzeichnet, dass**
das Aktivierungssignal der zusätzlichen Sicherheitslogikeinheit von der Hauptsicherheitslogikeinheit (2) erzeugt wird, wenn der Fahrzeugrollwinkel einen vordefinierten Grenzwert überschreitet.

6. Sicherheitslogikeinheit nach Anspruch 1 oder 2,
**dadurch gekennzeichnet, dass**
diese darüber hinaus einen Fahrzeug-Lateralbeschleunigungssensor (11') umfasst.

7. Sicherheitslogikeinheit nach Anspruch 1 oder 2,
**dadurch gekennzeichnet, dass**
diese darüber hinaus einen Fahrzeugrollgeschwindigkeitssensor (25) umfasst sowie ein zusätzliches Aktivierungssignal der Sicherheitslogikeinheit auftritt, wenn ein Signal des Fahrzeugrollgeschwindigkeitssensors (25) einen vordefinierten Grenzwert (28) überschreitet.

8. Sicherheitslogikeinheit nach Anspruch 1 und 2,
**dadurch gekennzeichnet, dass**
eine Aktivierung der Hauptlogikeinheit (2) und eine Aktivierung der Sicherheitslogikeinheit (1, 1, 1", 1"') für die Auslösung der Schutzgeräte erforderlich ist.

9. Sicherheitslogikeinheit nach Anspruch 1 und 2,
**dadurch gekennzeichnet, dass**
mindestens eines der Aktivierungssignale für eine vordefinierte Zeitspanne (17, 18, 20, 22, 29) gehalten wird.

10. Sicherheitslogikeinheit nach Anspruch 1 und 2,
**dadurch gekennzeichnet, dass**
ein Eingangswert mindestens eines Sensors (11, 11', 25) vorverarbeitet wird.

11. Sicherheitslogikeinheit nach Anspruch 10,
**dadurch gekennzeichnet, dass**
die Vorverarbeitung mindestens Signalskalierung, Entfernung einer Sensordrift und/oder Signalfilterung umfasst.

12. Verfahren zur Erkennung von Beinahe-Überschlagsituationen, wobei das Verfahren umfasst die Schritte der Messung der Fahrzeug-Lateralbeschleunigung und der Erzeugung eines Ausgangsaktivierungssignals, das eine Beinahe-Überschlagsituationen erkennt,
**dadurch gekennzeichnet, dass**
eine Beinahe-Überschlagsituation erkannt wird, wenn die Fahrzeug-Lateralbeschleunigung einen ersten vordefinierten Grenzwert überschreitet oder die Fahrzeug-Lateralbeschleunigung einen zweiten vordefinierten Grenzwert, der kleiner ist als der erste vordefinierte Grenzwert, überschreitet und mindestens ein zusätzliches Sicherheitsaktivierungssignal vorliegt.

13. Verfahren nach Anspruch 12,
**dadurch gekennzeichnet, dass**
es darüber hinaus den Schritt der Messung der Fahrzeugrollgeschwindigkeit umfasst und, wenn eine Fahrzeugrollgeschwindigkeit einen vordefinierten Grenzwert überschreitet, ein zusätzliches Aktivierungssignal auftritt.

14. Verfahren nach Anspruch 13,
**dadurch gekennzeichnet, dass**
es darüber hinaus den Schritt der Messung der linearen Fahrzeuggeschwindigkeit umfasst und, wenn die lineare Fahrzeuggeschwindigkeit einen vordefinierten Grenzwert überschreitet, ein zusätzliches Aktivierungssignal auftritt.

15. Verfahren nach Anspruch 12 oder 13,
**dadurch gekennzeichnet, dass**
es darüber hinaus den Schritt der Messung des Fahrzeugrollwinkels umfasst und, wenn der Fahrzeugrollwinkel einen vordefinierten Grenzwert überschreitet, ein zusätzliches Aktivierungssignal auftritt.

16. Verfahren nach Anspruch 15,
**dadurch gekennzeichnet, dass**
der Fahrzeugrollwinkel anhand der Fahrzeugrollgeschwindigkeit berechnet wird.

17. Verfahren nach Anspruch 12 oder 13,
**dadurch gekennzeichnet, dass**
mindestens ein Aktivierungssignal für eine vorbestimmte Zeitspanne gehalten wird.

18. Verfahren nach Anspruch 12 oder 13,
**dadurch gekennzeichnet, dass**
der Wert mindestens einer Messung vorverarbeitet wird.

19. Verfahren nach Anspruch 18,
**dadurch gekennzeichnet, dass**
besagte Vorverarbeitung mindestens Signalskalierung, Entfernung einer Sensordrift und / oder Signalfilterung umfasst.

## Revendications

1. Unité logique de sécurité pour des systèmes de détection du retournement d'un véhicule, comprenant une unité logique principale de détection de retournement et au moins un dispositif de protection de l'occupant ou des occupants d'un véhicule, l'unité logique de sécurité étant connectée à un capteur (11) d'accélération latérale du véhicule et générant un signal de sortie indiquant un événement de presque retournement, **caractérisée en ce que** l'événement de presque retournement est indiqué lorsque l'accélération latérale d'un véhicule dépasse une première valeur de seuil prédéfinie (15) ou lorsque l'accélération latérale du véhicule dépasse une seconde valeur de seuil prédéfinie (16) inférieure à la première valeur de seuil prédéfinie (15), et que, simultanément, au moins un signal additionnel d'activation de l'unité logique de sécurité (1, 1, 1", 1"') est présent.

2. Unité logique de sécurité selon la revendication 1, **caractérisé en ce que** le signal additionnel d'activation de l'unité logique de sécurité est un signal émis par une unité logique principale (2).

3. Unité logique de sécurité selon la revendication 2, **caractérisée en ce que** le signal additionnel d'activation de l'unité logique de sécurité est généré par l'unité logique principale (2) lorsque le taux de roulis d'un véhicule dépasse une valeur de seuil prédéfinie.

4. Unité logique de sécurité selon la revendication 3, **caractérisée en ce que** le signal additionnel d'activation de l'unité logique de sécurité est généré par l'unité logique principale (2) lorsque la vitesse linéaire d'un véhicule dépasse une valeur de seuil prédéfinie.

5. Unité logique de sécurité selon la revendication 2, **caractérisée en ce que** le signal additionnel d'activation de l'unité logique de sécurité est généré par l'unité logique principale (2) lorsque l'angle de roulis d'un véhicule dépasse une valeur de seuil prédéfinie.

6. Unité logique de sécurité selon la revendication 1 ou 2, **caractérisée en ce qu'**elle comporte, en outre, un capteur (11') d'accélération latérale du véhicule.

7. Unité logique de sécurité selon la revendication 1 ou 2, **caractérisée en ce qu'**elle comporte, en outre, un capteur (25) de vitesse de roulis d'un véhicule, et qu'un signal additionnel d'activation de l'unité logique de sécurité se produit lorsqu'un signal du capteur (25) du taux de roulis du véhicule dépasse une valeur de seuil prédéfinie (28).

8. Unité logique de sécurité selon la revendication 1 ou 2, **caractérisée en ce qu'**une activation de l'unité logique principale (2) et une activation de l'unité logique de sécurité (1, 1' 1", 1"') sont nécessaires pour activer les dispositifs de protection.

9. Unité logique de sécurité selon la revendication 1 ou 2, **caractérisée en ce qu'**au moins l'un des signaux d'activation est maintenu pendant une période prédéterminée (17, 18, 20, 22, 29).

10. Unité logique de sécurité selon la revendication 1 ou 2, **caractérisée en ce qu'**une valeur d'entrée d'au moins un capteur (11, 11', 25) est prétraitée.

11. Unité logique de sécurité selon la revendication 10, **caractérisée en ce que** le prétraitement implique au moins une mise à l'échelle du signal, l'élimination d'une dérive du capteur et/ou le filtrage d'un signal.

12. Procédé de détermination de situations de presque retournement, le procédé comprenant les étapes de mesure de l'accélération latérale d'un véhicule et de génération d'un signal d'activation de sortie qui détermine une situation de presque retournement, **caractérisé en ce qu'**une situation de presque retournement est déterminée si l'accélération latérale du véhicule dépasse une première valeur de seuil prédéfinie ou si l'accélération latérale du véhicule dépasse une seconde valeur de seuil prédéfinie inférieure à la première valeur de seuil prédéfinie qui est inférieure à la première valeur de seuil prédéfinie et qu'au moins un signal d'activation additionnel est présent.

13. Procédé selon la revendication 12, **caractérisé en ce qu'**il comprend, en outre, l'étape de mesure du taux de roulis d'un véhicule, et **en ce qu'**un signal d'activation additionnel se produit lorsqu'un taux de roulis d'un véhicule dépasse une valeur de seuil prédéfinie.

14. Procédé selon la revendication 13, **caractérisé en ce qu'**il comprend, en outre, l'étape de mesure de la vitesse linéaire d'un véhicule, et **en ce qu'**un signal d'activation additionnel se produit lorsque la vitesse linéaire d'un véhicule dépasse une valeur de seuil prédéfinie.

15. Procédé selon la revendication 12 ou 13, **caractérisé en ce qu'**il comprend, en outre, l'étape de mesure de l'angle de roulis d'un véhicule, et **en ce qu'**un signal d'activation additionnel se produit lorsque l'angle de roulis d'un véhicule dépasse une valeur de seuil prédéfinie.

16. Procédé selon la revendication 15, **caractérisé en ce que** l'angle de roulis du véhicule est calculé sur la base du taux de roulis d'un véhicule.

17. Procédé selon la revendication 12 ou 13, **caractérisé en ce qu'**au moins un signal d'activation est maintenu pendant une période prédéterminée.

18. Procédé selon la revendication 12 ou 13, **caractérisé en ce qu'**une valeur d'au moins une des mesures est prétraitée.

19. Procédé selon la revendication 18, **caractérisé en ce que** ledit prétraitement implique au moins une mise à l'échelle du signal, l'élimination d'une dérive du capteur et/ou le filtrage d'un signal.
